# EUROPÄISCHE PATENTANMELDUNG

(11) **EP 2 100 864 A1**
(43) Veröffentlichungstag der Anmeldung: **16.09.2009**
(21) Anmeldenummer: 09000752.7
(22) Anmeldetag: 21.01.2009
(51) Int. Cl.: C04B 35/573, C04B 35/83, C04B 41/45, F16D 69/02

(54) **Verfahren zur Herstellung von Reibflächen oder Reibschichten einer Carbon-Keramik-Bremsscheibe sowie eine mit derartigen Reibflächen oder Reibschichten ausgestatteten Carbon-Keramik-Bremsscheibe**

(30) Priorität: 05.03.2008 DE 102008012683
(71) Anmelder: Audi AG, 85045 Ingolstadt (DE)
(72) Erfinder: Rosenlöcher, Jens, 86161 Augsburg (DE)
(74) Vertreter: Asch, Konrad

(57) **Zusammenfassung**

Die Erfindung betrifft ein Verfahren zur Herstellung von Reibflächen oder Reibschichten bei einer Carbon-Keramik-Bremsscheibe für Kraftfahrzeuge, bei der die Reibflächen oder die Reibschichten im Endbearbeitungszustand durch ein thermisches Beschichtungsverfahren behandelt werden. Ebenfalls betrifft die Erfindung entsprechende Reibflächen oder Reibschichten einer Carbon-Keramik-Bremsscheibe für Kraftfahrzeuge, die nach einem solchen Verfahren hergestellt werden.

## Beschreibung

Die Erfindung betrifft neben einem Verfahren zur Herstellung von Reibflächen oder Reibschichten einer Carbon-Keramik-Bremsscheibe für Kraftfahrzeuge auch eine derartige Carbon-Keramik-Bremsscheibe deren Reibflächen oder Reibschichten nach einem derartigen Verfahren hergestellt sind.

Ein Teil der auf dem Markt erhältlichen Carbon-Keramik-Bremsscheiben haben auf ihren Reibflächen eine spezielle Reibschicht. Dabei weist diese Reibschicht eine andere Zusammensetzung als der übrige Carbon-Keramik-Grundkörper auf. Dieses bedeutet, dass in den Randschichten der Anteil an Silizium-Carbid-Keramik wesentlich höher ist als in dem übrigen Grundkörper. Durch diese Maßnahme wird eine entsprechende Verschleißbeständigkeit der Reibflächen bzw. der Reibschichten erreicht. Bei einer derartigen Herstellung werden die Reibschichten auf den Grundkörper im so genannten Grünzustand des Materials, d. h. im CFK- oder CFC-Zustand, aufgebracht. Dieses Aufbringen geschieht durch Verkleben oder Aufpressen. Dieser Verbund zwischen dem Grundkörper und der Reibschicht wird anschließend zusammen siliziert.

Beim Silizieren wird mit flüssigem Silizium bei Temperaturen > 1.450 °C die Bremsscheibe infiltriert. Dieser Vorgang wird in der Regel im Vakuum oder unter Schutzgas durchgeführt.

Durch den so entstandenen Körper, der eine unterschiedliche Zusammensetzung aufweist, entstehen zwangsläufig unterschiedliche, thermische Ausdehnungskoeffizienten, beispielsweise des Grundkörpers im Vergleich zu den Reibschichten bzw. Reibflächen. Darüber hinaus besteht nach dem Silizierungsprozess beim Abkühlen die Gefahr, dass thermische Spannungen sich zwischen Grundkörper und Reibschicht bzw. Reibflächen aufbauen. Derartige Spannungen führen in der Regel zu einer teilweise sehr stark ausgeprägten, durchgängigen tiefen Rissstruktur innerhalb der Reibschichten bzw. der Reibflächen. Der Nachteil derartiger Risse ist eine erhöhte offen zugängliche Gefügestruktur gegenüber Sauerstoff und Umgebungsmedien.

Eine Bremsscheibe mit einem kohlenstoffhaltigen Matrixmaterial in Form von eingebetteten Kohlefasern ist beispielsweise aus der DE 20 49 292 C3 bekannt geworden.

Eine Erfindung, die sich auf Gegenstände aus Kohlenstoff mit einer Antioxidationsbeschichtung über mindestens einen Teil ihrer Oberfläche beziehen, zeigt die DE 25 40 083 A1. Dabei weist eine kohlenstoffhaltige Bremsscheibe eine Antioxidationsbeschichtung auf zumindest einen Teil ihrer Oberfläche auf, wobei diese Beschichtung aus einer Siliziumlage unmittelbar auf der Oberfläche der Bremsscheibe, und eine auf dieser Siliziumlage aufgebrachten Nickellage und aus einer Chromlage über der Nickellage besteht.

Um die Nachteile des bekannten Standes der Technik ausräumen zu können, besteht für die vorliegende Erfindung die Aufgabe eine verschleiß- und oxidationsbeständige Oberfläche auf den Reibflächen bzw. den Reibschichten von Bremsscheiben für Kraftfahrzeuge zu schaffen.

Die Aufgabe der Erfindung wird durch Verfahren der Patentansprüche 1 und 2 sowie nach diesem Verfahren hergestellte Reibflächen oder Reibschichten einer Carbon-Keramik-Bremsscheibe gemäß Patentanspruch 12 gelöst. Die Unteransprüche geben dabei eine weitere Ausgestaltung des erfindungsgemäßen Gedankens wieder.

Um bei den Reibflächen oder Reibschichten einer Carbon-Keramik-Bremsscheibe die Standzeiten und damit die Laufleistung bei einem konstanten Reibwert zu erhöhen, wird erfindungsgemäß vorgeschlagen, dass die Reibschichten nachträglich auf die bereits silizierten und evtl. auch bereits endbearbeiteten Carbon-Keramik-Grundkörper aufgebracht werden. Die Schaffung derartiger Reibschichten wird durch ein Verfahren, nämlich ein thermisches Spritzen erreicht. Durch thermisches Spritzen können hoch beanspruchte, gefährdete Oberflächen geschützt oder auch so verändert werden, dass sie extremen hohen Belastungen Stand halten. Neben der hohen Belastbarkeit hat ein derartiges thermisches Spritzverfahren auch den Vorteil, dass nur solche Teile mit einer geeigneten Oberflächenbeschichtung versehen werden, die für die Beanspruchung eine derartige Oberfläche benötigen. Bei derartigen thermischen Spritzverfahren besteht eine große Anzahl von Kombinationsmöglichkeiten, was die Verwendung von Grundwerkstoffen mit Schichtwerkstoffen betrifft.

Es gibt verschiedene thermische Spritzverfahren, die jedoch nicht miteinander konkurrieren in ihrer Anwendung sondern sie ergänzen sich durch entsprechende spezielle Verfahrenseigenschaften. Jedoch benötigen alle thermischen Spritzverfahren zur Erzeugung entsprechender Spritzschichten zwei Energiearten, dieses ist zum einen die thermische und zum anderen eine kinetische Energie. Als Energieträger wird vorzugsweise eine Brenngas-Sauerstoff-Flamme, ein elektrischer Lichtbogen, ein Plasmastrahl oder auch ein Laserstrahl verwendet. Bei derartigen Verfahren wird die thermische Energie dafür benötigt, um den Spritzzusatzstoff entsprechend in einen Schmelzzustand zu bringen, um mit der kinetischen Energie die einzelnen Partikel auf den Grundwerkstoff zu transportieren.

Als thermische Spritzverfahren für Carbon-Keramik-Bremsscheiben haben sich Flammspritzen mit Draht oder Stab, Flammspritzen mit Pulver, Hochgeschwindigkeitsflammspritzen, Detonationsspritzen, Plasmaspritzen, Laserspritzen, Lichtbogenspritzen oder dergleichen als geeignetes Verfahren ausgezeichnet.

So wird beispielsweise beim Draht- oder Stabflammspritzen der Zusatz Spritzwerkstoff im Zentrum einer Azythelen-Sauerstoffflamme kontinuierlich aufgeschmolzen. Durch ein entsprechendes Zerstäubergas, z. B. Druckluft oder Stickstoff, werden aus dem Schmelzbereich die tröpfchenförmigen Spritzpartikel abgelöst und auf die vorbereitete Werkstoffoberfläche, in diesem Falle die Reibschichten oder Reibflächen der Carbon-Keramik-Bremsscheibe gespritzt oder geschleudert.

Bei einem weiteren bevorzugten Verfahren wird bei dem Flammspritzen mit Pulver eine pulverförmige Spritzsubstanz in einer Azythelen-Sauerstoffflamme an- oder aufgeschmolzen und gleichzeitig mit Hilfe der expandierenden Verbrennungsgase auf die Reibfläche oder Reibschicht geschleudert.

Bei einem weiteren bevorzugten Verfahren, nämlich dem Hochgeschwindigkeitsflammspritzen, erfolgt eine kontinuierliche Gasverbrennung mit hohen Drücken innerhalb einer Brennkammer, in der ein pulverförmiger Spritzzusatz zugeführt wird. Durch den in der Brennkammer erzeugten Druck des Brenngassauerstoffgemisches und einer nachgeordneten Expansionsdüse wird so eine gewünschte hohe Strömungsgeschwindigkeit im Gasstrahl erzeugt. Dadurch werden die Spritzpartikel auf die hohe Partikelgeschwindigkeit beschleunigt und so zu einer dichten Spritzschicht mit ausgezeichneter Hafteigenschaft ausgeführt.

Bei dem ebenfalls als bevorzugte Ausführungsform verwendeten Detonationsspritzen wird ein Azythelen-Sauerstoff-Spritzpulvergemisch durch einen Zündfunken zur Detonation gebracht. Die in einem Rohr dabei entstehende Schockwelle beschleunigt die Spritzteilchen. Diese werden durch die Flamme aufgeheizt und mit einer hohen Partikelgeschwindigkeit gerichtet auf die Oberfläche der Carbon-Keramik-Bremsscheibe geschleudert.

Beim Plasmaspritzen, ebenfalls einem bevorzugten Ausführungsverfahren, wird der pulverförmige Spritzzusatz in oder außerhalb der Spritzpistole durch einen Plasmastrahl geschmolzen und auf die Oberfläche der Carbon-Keramik-Bremsscheibe gebracht.

Die vor beschriebenen, nicht abschließend aufgeführten thermischen Spritzverfahren können somit einen Verschleißschutz und gleichzeitig auch einen Korrosionsschutz erzeugen. Ferner ist der Kornabrieb wesentlich geringer als bei herkömmlichen Beschichtungen. Weitere Vorteile bestehen darin, dass sich quasi jedes Material bespritzen und auch verspritzen lässt. Ein ganz entscheidender Faktor ist, dass das beschichtete Material, in diesem Falle die Oberfläche der Carbon-Keramik-Bremsscheibe thermisch nicht verändert wird. Dabei sind Bauteilgröße und Geometrie völlig egal, weil durch entsprechende Automatisierung der thermische Spritzprozess sehr flexibel ist. Neben einer hohen Reproduzierbarkeit ist auch eine hohe Maßgenauigkeit und ein hoher Qualitätsstandard durch derartige thermische Spritzverfahren gewährleistet.

So ist es möglich, neben dem Erreichen einer sehr guten Verschleiß- und Oxidationsbeständigkeit einen guten Reibungskoeffizienten dieser Schichten durch die entsprechende Auswahl von Materialien zu gewährleisten. Darüber hinaus wird es möglich, einen annähernd gleichen thermischen Ausdehnungskoeffizienten durch die entsprechende Materialauswahl wie bei dem Carbon-Keramik-Grundkörper zu erreichen. Durch diese Maßnahme werden im späteren Betrieb der Bremsscheibe keine Risse aufgrund von thermischen Spannungen auftreten. Auch wird durch die Wahl eines entsprechenden thermischen Beschichtungsverfahren die Rissstruktur der Reibschichten und Reibflächen deutlich reduziert bzw. sie kann vollkommen vermieden werden. Durch eine derartige Maßnahme wird insbesondere auch die Aufnahme von Umgebungsmedien deutlich reduziert.

Ein weiterer Vorteil ist, dass durch die Verschleiß- und Oxidationsbeständigkeit der thermisch gespritzten Reibflächen bzw. Reibschichten es zu einer höheren Laufleistung der Keramikbremsscheiben kommt, was insbesondere Serviceintervalle deutlich verlängern kann.

Die zu verarbeitenden Materialien, beispielsweise bei der Keramik, können je nach Auswahl, zum Beispiel aus der Gruppe der Siliziumkarbide (SiC) sowie Siliziumnitrid (SiN, Si₃N₄) oder Borkarbid (B₄C) oder Bornitrid (BN) sowie Titankarbid (TiC) oder Titannitrid (TiN) oder Siliziumoxid oder Zirkoniumoxid oder Mischungen hieraus gebildet werden. Es sind auch Mischungen dieser Keramiken mit Metallen, wie z.B. Fe, Si, Ni, Cr, Cu, Mo möglich.

Dadurch, dass die Reibflächen oder Reibschichten einer Carbon-Keramik-Bremsscheibe nachträglich nach dem Silizieren bzw. auch nach einer endbearbeiteten Carbon-Keramik-Oberfläche aufgebracht werden, kann durch die geeignete Wahl der aufzubringenden Materialien neben der Erhöhung der Verschleißbeständigkeit und der Oxidationsbeständigkeit gezielt ein guter Reibungskoeffizient erreicht werden. Darüber hinaus ist das Auftreten von Rissen durch thermische Spannungen unterbunden, da die Beschichtungen der Reibflächen und Reibschichten das gleiche thermische Verhalten wie der Grundkörper aufweisen.

## Patentansprüche

1. Verfahren zur Herstellung von Reibflächen oder Reibschichten einer Carbon-Keramik-Bremsscheibe für Kraftfahrzeuge, **dadurch gekennzeichnet, dass** die Reibflächen oder die Reibschichten nachträglich auf dem endbearbeiteten Carbon-Keramik-Grundkörper der Bremsscheibe durch ein thermisches Beschichtungsverfahren aufgebracht werden.

2. Verfahren zur Herstellung von Reibflächen oder Reibschichten einer Carbon-Keramik-Bremsscheibe für Kraftfahrzeuge, **dadurch gekennzeichnet, dass** die Reibflächen oder die Reibschichten nachträglich auf den bereits silizierten Carbon-Keramik-Grundkörper der Bremsscheibe durch ein thermisches Beschichtungsverfahren aufgebracht werden.

3. Verfahren Nach Anspruch 1 oder 2, **dadurch gekennzeichnet, dass** das Beschichtungsverfahren der Reibflächen oder Reibschichten durch ein thermisches Spritzverfahren ausgeführt wird.

4. Verfahren nach einem oder mehreren der vorhergehenden Ansprüche, **dadurch gekennzeichnet, dass** das thermische Spritzverfahren durch Plasmaspritzen erzielt wird.

5. Verfahren nach einem oder mehreren der vorhergehenden Ansprüche, **dadurch gekennzeichnet, dass** das thermische Spritzverfahren durch Drahtlichtbogenspritzverfahren ausgeführt wird.

6. Verfahren nach einem oder mehreren der vorhergehenden Ansprüche, **dadurch gekennzeichnet, dass** das thermische Spritzverfahren durch ein Hochgeschwindigkeitsflammspritzverfahren ausgeführt wird.

7. Verfahren nach einem oder mehreren der vorhergehenden Ansprüche, **dadurch gekennzeichnet, dass** das thermische Spritzverfahren durch Flammspritzverfahren ausgeführt wird.

8. Verfahren nach einem oder mehreren der vorhergehenden Ansprüche, **dadurch gekennzeichnet, dass** bei dem thermischen Spritzverfahren zum Auftrag der Reibflächen oder Reibschichten unterschiedliche Materialien verwendet werden.

9. Verfahren nach einem oder mehreren der vorhergehenden Ansprüche, **dadurch gekennzeichnet, dass** bei dem thermischen Spritzverfahren zum Auftrag der Reibflächen oder Reibschichten Mischkeramiken verwendet werden.

10. Verfahren nach einem oder mehreren der vorhergehenden Ansprüche, **dadurch gekennzeichnet, dass** bei dem thermischen Spritzverfahren zum Auftrag der Reibflächen oder Reibschichten Metalle verwendet werden.

11. Verfahren nach einem oder mehreren der vorhergehenden Ansprüche, **dadurch gekennzeichnet, dass** bei dem thermischen Spritzverfahren zum Auftrag der Reibflächen oder Reibschichten Legierungen oder Mischungen verwendet werden.

12. Reibflächen oder Reibschichten einer Carbon-Keramik-Bremsscheibe für Kraftfahrzeuge mit einem Carbon-Keramik-Grundkörper dessen Reibflächen oder Reibschichten durch ein Verfahren gemäß einem oder mehreren der vorhergehenden Ansprüche hergestellt werden.

13. Reibflächen oder Reibschichten nach Anspruch 12, **dadurch gekennzeichnet, dass** die Reibflächen oder die Reibschichten annähernd den gleichen thermischen Ausdehnungskoeffizienten wie der verwendete Carbon-Keramik-Grundkörper aufweisen.

14. Reibflächen oder Reibschichten nach Anspruch 12 oder 13, **dadurch gekennzeichnet, dass** die Reibfläche oder die Reibschicht über die Laufleistung einen konstanten Reibwert aufweist.

15. Reibflächen oder Reibschichten nach Anspruch 12, **dadurch gekennzeichnet, dass** die Reibfläche oder die Reibschicht verschleiß- und oder oxidationsbeständig ist.

16. Kraftfahrzeug mit Carbon-Keramik-Bremsscheiben, deren Reibflächen oder Reibschichten durch ein thermischen Spritzverfahren gemäß einem oder mehreren der vorhergehenden Ansprüche 1 bis 11 hergestellt wird.
